# EUROPEAN PATENT APPLICATION

(11) **EP 3 846 028 A1**
(43) Date of publication of application: **07.07.2021**
(21) Application number: 19910376.3
(22) Date of filing: 26.12.2019
(51) Int. Cl.: G06F 9/48

(54) **METHOD AND DEVICE FOR RESUMING EXECUTION OF APPLICATION, AND COMPUTER**

(30) Priority: 18.01.2019 CN 201910049860
(71) Applicant: HUAWEI TECHNOLOGIES CO., LTD., Shenzhen, Guangdong 518129 (CN)
(72) Inventor: XIAO, Wei, Shenzhen, Guangdong 518129 (CN); JIANG, Yangyang, Shenzhen, Guangdong 518129 (CN); LIN, Zichang, Shenzhen, Guangdong 518129 (CN)
(74) Representative: Pfenning, Meinig & Partner mbB
(86) International application number: PCT/CN2019/128560
(87) International publication number: WO 2020/147544

(57) **Abstract**

This application provides a method and an apparatus for resuming running of an application, and a computer, and relates to a virtualization technology. According to the method, after running of an application is suspended, the virtual machine monitor stores a context of the application, so that when a resumption request of the application is detected, the context of the application may be directly restored by the virtual machine monitor, in other words, the running of the application program is resumed. In the process of resuming the running of the application, it is not necessary to first restore a context of a guest operating system by the virtual machine monitor, and then restore the context of the application by the guest operating system, and one operation of restoring a context is reduced. Therefore, a speed of resuming the running of the application is increased.

## Description

This application claims priority to Chinese Patent Application No. 201910049860.7, filed on January 18, 2019 and entitled "METHOD AND APPARATUS FOR RESUMING RUNNING OF APPLICATION, AND COMPUTER", which is incorporated herein by reference in its entirety.

### TECHNICAL FIELD

This application relates to the field of computer technologies, and in particular, to a method and an apparatus for resuming running of an application, and a computer.

### BACKGROUND

A virtualization technology is a technology of abstracting hardware resources such as a processor and a memory of a computer (or referred to as a physical host) into a plurality of virtual resources for use by a plurality of virtual machines, to effectively improve utilization of the resources of the physical host. A physical host using a virtualization architecture mainly includes: a hardware layer including hardware resources, a host operating system (host operating system, host OS) running on the hardware layer, a virtual machine monitor (virtual machine monitor, VMM) running in the host OS, and a plurality of virtual CPUs (virtual CPU, VCPU) running on the VMM. One virtual machine (virtual machine, VM) runs on one or more VCPUs. Each VM may include a guest operating system (guest operating system, guest OS) and an application (application, APP) running on the guest OS.

In a related technology, when an APP triggers a system call or an exception, or an interrupt is received, if a physical host needs an exit from a guest OS to a VMM for processing, the guest OS stores a context of the APP, and the guest OS causes the exit to the VMM. Then, the VMM stores a context of the guest OS and performs related processing. When the physical host needs to resume running of the APP, the context of the guest OS may be restored by using the VMM, and the VMM causes an entry to the guest OS. Next, the context of the APP may be restored by using the guest OS and the APP may continue to run. The exit means that a system control right of the physical host is switched from the guest OS to the VMM. The entry means that the system control right of the physical host is switched from the VMM to the guest OS. It can be learned that, when the exit and the entry occur on the physical host, resumption of running of the APP requires a relatively large quantity of operations such as context storage and restoration, resulting in a low resumption speed of the APP.

### SUMMARY

This application provides a method and an apparatus for resuming running of an application, and a computer, to accelerate a speed of resuming running of an application.

According to one aspect, this application provides a method for resuming running of an application. The method may be applied to a computer (or referred to as a physical host) using a virtualization architecture. The computer may include: a virtual machine monitor, a guest operating system running on the virtual machine monitor, and an application running on the guest operating system. The method may include: suspending, by the guest operating system, running of the application, and causing an exit to the virtual machine monitor; then storing, by the virtual machine monitor, resumption information of the application, where the resumption information may include a context of the application or a storage address of the context; and next, restoring, by the virtual machine monitor, the context of the application based on the resumption information, and causing an entry to the guest operating system, so that running of the application may be resumed. To be specific, the application may be resumed to a status at the last suspension and continue to run.

It can be seen that, in the process of resuming running of the application, the virtual machine monitor may directly restore the context of the application, instead of first restoring a context of the guest operating system and then restoring the context of the application by using the guest operating system, thereby effectively accelerating resumption of running of the application.

In some implementations, running of the application is suspended in response to an exit request. In other words, running of the application is suspended when an exit request is detected. The exit request may be triggered by any one of the following events: a system call triggered by the application, an exception triggered by the application, and an interrupt reported by a hardware layer of the physical host. Alternatively, it may be understood that the system call, the exception, or the interrupt is the exit request or a part of the exit request.

In some implementations, running of the application is resumed in response to a resumption request of the application. In other words, when a resumption request of the application is detected, the operation of restoring the context of the application is triggered. The resumption request may be triggered by a signal that is sent by another process in the virtual machine monitor and that needs to be processed by the application, may be automatically triggered after the virtual machine monitor completes an operation indicated by the exit request, may be triggered by a virtual machine scheduler in the virtual machine monitor when it is detected, based on a scheduling algorithm, that a virtual machine to which the application belongs needs to be scheduled, or may be triggered by manual configuration or instruction sending.

It should be noted that, in some virtualization architectures, the "virtual machine monitor" may be understood as a VMM, and in some other virtualization architectures, the "virtual machine monitor" may be understood as a hypervisor.

In some implementations, before the causing, by the guest operating system, an exit to the virtual machine monitor, the method may further include: obtaining, by the guest operating system, the resumption information of the application, and transferring the resumption information of the application to the virtual machine monitor. The resumption information may be transferred to the virtual machine monitor by sharing a register or invoking an interface. The two manners have relatively high efficiency of transferring the resumption information, and can ensure efficiency of resuming running of the application.

In some implementations, before the virtual machine monitor stores the resumption information of the application, the method may further include: transferring, by the guest operating system, a storage address of a context of the guest operating system to the virtual machine monitor; and correspondingly, the process in which the virtual machine monitor stores the resumption information of the application may include: determining, by the virtual machine monitor, the storage address of the context of the application based on the storage address of the context of the guest operating system and based on a relationship between the storage address of the context of the guest operating system and the storage address of the context of the application; and storing, by the virtual machine monitor, the storage address of the context of the application, or storing the context of the application based on the storage address of the context of the application.

The relationship between the storage address of the context of the guest operating system and the storage address of the context of the application may meet as follows: Storage address of the context of the application = Storage address of the context of the guest operating system - Storage capacity occupied by the context of the guest operating system. Alternatively, the relationship between the storage address of the context of the guest operating system and the storage address of the context of the application may meet as follows: Storage address of the context of the application = Storage address of the context of the guest operating system + Storage capacity occupied by the context of the guest operating system.

As the guest operating system transfers the storage address of the context of the guest operating system to the virtual machine monitor, and the virtual machine monitor stores the resumption information of the application by using the storage address, flexibility of storing the resumption information of the application by the virtual machine monitor is improved.

In some implementations, when the resumption information is the context of the application, the virtual machine monitor stores the context of the application into at least one of the following storage locations: a control structure of a virtual machine to which the application belongs, a management structure of a process corresponding to a virtual processor to which the application belongs, and a storage location other than the control structure and the management structure in a memory of the physical host. Certainly, the virtual machine monitor may alternatively store the context of the application into any other storage location such as a hard disk of the physical host. As the virtual machine monitor stores the context of the application, when running of the application needs to be resumed, the virtual machine monitor can directly restore the context of the application. The control structure may be a virtual machine management structure (VM control structures, VMCS). The management structure may be a task structure (task_struct).

In some implementations, when the context of the application is stored in the management structure, the method may further include: when a debugging instruction for the application is detected, debugging, by a debugging tool installed in a host operating system, the application based on a storage address of the context of the application in the management structure. Because the management structure of the process corresponding to the virtual processor to which the application belongs stores the context of the application, when the virtual machine monitor detects the debugging instruction for the application, the application may be directly debugged based on the storage address of the context of the application in the management structure by using the debugging tool. In the debugging process, the debugging tool does not need to be adapted, thereby effectively improving efficiency of debugging the application.

In some implementations, the process in which the virtual machine monitor restores the context of the application may include: storing, by the virtual machine monitor, the context of the application into a corresponding register. The context of the application is stored in the corresponding register, so that the application may continue to run from the status at the last suspension.

In some implementations, the exit request may be triggered by any one of the following requests: a system call triggered by the application, an exception triggered by the application, and an interrupt reported by a hardware layer of the physical host. Alternatively, it may be understood that the system call, the exception, or the interrupt is the exit request or a part of the exit request.

According to another aspect, this application provides a computer. The computer (or referred to as a physical host) may include a hardware layer, a virtual machine monitor running on the hardware layer, a guest operating system running on the virtual machine monitor, and an application running on the guest operating system. The components in the computer may be configured to implement the method for resuming running of an application provided in the foregoing aspect. These components may be hardware, software, or a combination of hardware and software.

According to still another aspect, this application provides an apparatus for resuming running of an application. The apparatus includes a plurality of modules, and the plurality of modules are configured to implement the method for resuming running of an application provided in the foregoing aspect. The apparatus may be deployed on a computer, and run by the computer to implement the foregoing method. The computer (or referred to as a physical host) includes: a virtual machine monitor, a guest operating system running on the virtual machine monitor, and an application running on the guest operating system. The modules of the apparatus may be distributed inside the guest operating system and the virtual machine monitor.

According to yet another aspect, this application provides a computer-readable storage medium or a computer program (product). The computer-readable storage medium or the computer program stores an instruction. When a processor reads an instruction line stored in the computer-readable storage medium or the computer program, the processor is enabled to perform the method for resuming running of an application provided in the foregoing aspect.

According to yet another aspect, this application provides an apparatus for resuming running of an application. The apparatus may include: a memory, a processor, and a computer program that is stored in the memory and that can run on the processor. When executing the computer program, the processor implements the method for resuming running of an application provided in the foregoing aspect.

In conclusion, the embodiments of the present invention provide a method and an apparatus for resuming running of an application, and a computer. In the solutions, after running of an application is suspended, a context of the application or a storage address of the context may be stored by using a virtual machine monitor. In this way, when running of the application needs to be resumed, the context of the application may be directly restored by using the virtual machine monitor. In the process of resuming running of the application, it is unnecessary to first restore a context of a guest operating system by using the virtual machine monitor and then restore the context of the application by using the guest operating system, thereby saving one context restoration operation, and effectively accelerating resumption of running of the application.

### BRIEF DESCRIPTION OF DRAWINGS

FIG. 1 is an architectural diagram of a physical host using a virtualization technology according to an embodiment of the present invention;
FIG. 2 is an architectural diagram of another physical host using a virtualization technology according to an embodiment of the present invention;
FIG. 3 is a flowchart of a method for resuming running of an application according to an embodiment of the present invention;
FIG. 4 is an execution flowchart of a method for resuming running of an application according to an embodiment of the present invention;
FIG. 5 is an architectural diagram of still another physical host using a virtualization technology according to an embodiment of the present invention;
FIG. 6 is a flowchart of another method for resuming running of an application according to an embodiment of the present invention;
FIG. 7 is another execution flowchart of resuming running of an application according to an embodiment of the present invention;
FIG. 8 is a flowchart of still another method for resuming running of an application according to an embodiment of the present invention;
FIG. 9 is still another execution flowchart of resuming running of an application according to an embodiment of the present invention;
FIG. 10 is a flowchart of yet another method for resuming running of an application according to an embodiment of the present invention;
FIG. 11 is yet another execution flowchart of resuming running of an application according to an embodiment of the present invention;
FIG. 12 is a schematic diagram of a structure of an apparatus for resuming running of an application according to an embodiment of the present invention;
FIG. 13 is a schematic diagram of a structure of another apparatus for resuming running of an application according to an embodiment of the present invention; and
FIG. 14 is a schematic diagram of a structure of still another apparatus for resuming running of an application according to an embodiment of the present invention.

### DESCRIPTION OF EMBODIMENTS

A method for resuming running of an application provided in embodiments of this application is described below in detail with reference to accompanying drawings.

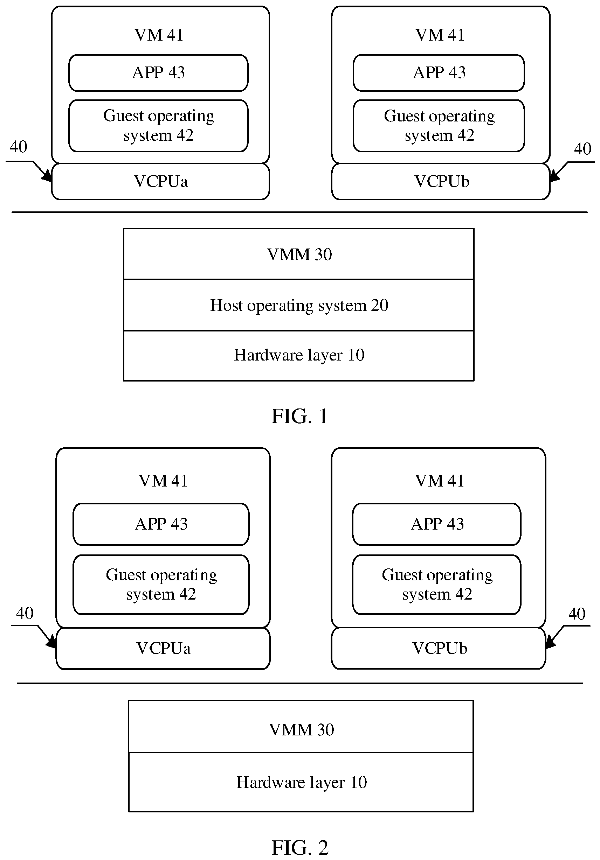

FIG. 1 is an architectural diagram of a physical host using a virtualization technology according to an embodiment of the present invention. As shown in FIG. 1, the physical host may also be referred to as a computer. Referring to FIG. 1, the physical host may include: a hardware layer 10, a host operating system (host OS) 20 running on the hardware layer 10, a VMM 30 running in the host OS 20, and a plurality of VCPUs 40 running on the VMM 30. For example, FIG. 1 shows two VCPUs: a VCPUa and a VCPUb. One VM 41 runs on each VCPU 40. Each VM 41 includes a guest operating system (guest OS) 42 and at least one APP 43 running on the guest OS 42. For example, in an architecture shown in FIG. 1, each VM 41 includes one APP 43. In this embodiment of the present invention, "at least one" may refer to one or more, and "a plurality of" may refer to two or more.

The hardware layer 10 may include hardware devices such as one or more physical processors (physical CPUs), a physical storage device (for example, a memory and a hard disk), a network interface, and a peripheral. The host OS 20 may be a Linux operating system. The VMM 30, also referred to as a hypervisor, is software middleware running between the hardware layer 10 and each VCPU 40, and is configured to coordinate and provide a hardware resource of the hardware layer 10 for each VCPU 40, so that the guest operating system 42 and the application 43 run. For example, the VMM 30 may coordinate and provide a processing resource of the physical CPU for each VCPU 40.

Referring to FIG. 1, the VMM 30 may run in the host OS 20. Alternatively, the VMM 30 may be deployed independently of the host OS 20. In other words, the VMM 30 may directly run on the hardware layer 10. Alternatively, as shown in FIG. 2, the host OS 20 may not need to be deployed in the physical host. An architecture of the physical host is not limited in this embodiment of the present invention.

The guest OS 42 may be a library operating system (library OS, LibOS). The LibOS, also referred to as unikernel, is a lightweight virtualization technology. The LibOS uses an OS exokernel architecture and abstracts functions of an OS into a library, and provides a library file, a union file system, a common file system, and functions for performing various operations and interacting with another module.

Generally, in a process in which the physical host runs an APP 43 in a guest OS 42 of a VM 40, when the APP 43 triggers a system call, an exception occurs, or the hardware layer 10 reports an interrupt, if the physical host needs the guest OS 42 to cause an exit to the VMM 30 for processing, a context of the APP 43 may be stored by using the guest OS 42 in the VM 40, and the guest OS 42 causes the exit to the VMM 30. Next, by using the VMM 30, a context of the guest OS 42 may be stored and related processing may be performed. When running of the APP 43 needs to be resumed, the context of the guest OS 42 may be restored by using the VMM 30, and the VMM 30 causes an entry to the guest OS 42. Finally, the context of the APP 43 may be restored by using the guest OS 42, and the APP 43 may continue to run.

However, because the context of the APP 43 is stored in the guest OS 42, according to the method in the related technology, in the process of resuming running of the APP, the context of the guest OS 42 needs to be first restored by using the VMM 30, and then the context of the APP 43 is restored by using the guest OS 42. Efficiency of resuming running of the APP 43 is relatively low.

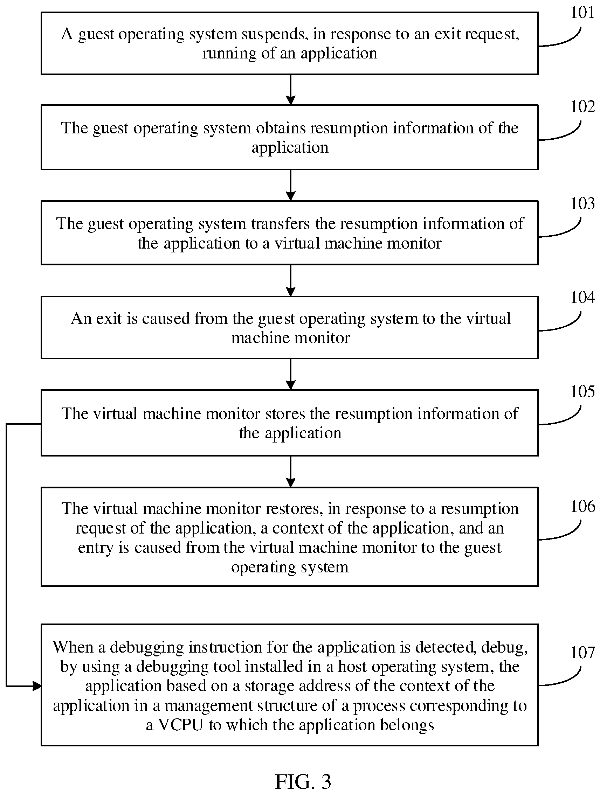

An embodiment of the present invention provides a method for resuming running of an application. The method may be applied to the physical host shown in FIG. 1 or FIG. 2. The method may resolve the problem of relatively low efficiency in the related technology when a physical host resumes running of an APP, and may be used to accelerate a speed of resuming running of an application. Referring to FIG. 3, the method may include the following steps.

Step 101: A guest operating system suspends, in response to an exit request, running of an application.

The exit request may be triggered by any one of the following events: a system call triggered by an application, an exception triggered by an application, and an interrupt reported by a hardware layer of the physical host. Alternatively, it may be understood that the system call, the exception, or the interrupt is the exit request or a part of the exit request.

The system call may be a service request actively sent by the application to the guest operating system. The exception may be a processing request sent by the application to the guest operating system when a current instruction fails to be executed (due to an invalid instruction, a memory page fault, or other causes). The interrupt may be an input/output (input/output, I/O) interrupt sent by a peripheral of the hardware layer to the guest operating system, or an inter-processor interrupt (inter-processor interrupt, IPI) sent by a physical CPU to the guest operating system. To be specific, in a process in which the application runs in the guest operating system, when the system call or the exception sent by the application or the interrupt request sent by the hardware layer is detected, the physical host may suspend running of the application. In this case, a system control right of the physical host is switched from the application to the guest operating system. In other words, the application causes an exit to the guest operating system.

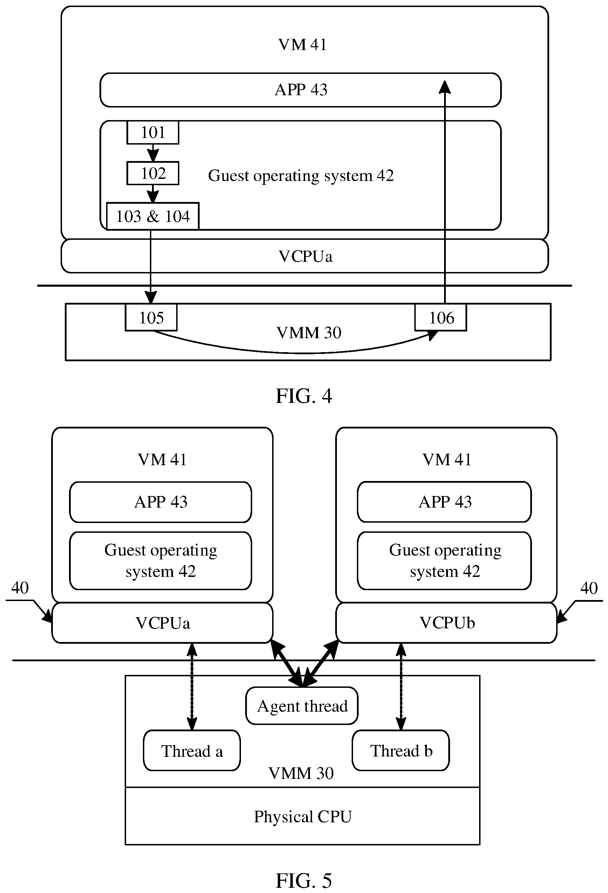

For example, referring to FIG. 4, a VCPUa running on a VMM 30 is used as an example. Assuming that an APP 43 in a VM 41 running on the VCPUa sends a system call to a guest OS 42 in a running process, the physical host suspends running of the APP 43 by using the guest OS 42.

Step 102: The guest operating system obtains resumption information of the application.

After running of the application is suspended by using the guest operating system, the physical host may obtain the resumption information of the application by using the guest operating system. The resumption information may include a context (context) of the application or a storage address of the context. The storage address may be a storage address of the context in a memory. The context of the application may include information required for resuming running of the application, for example, may include related data that is of the application and that is recorded in a register when running of the application is suspended. The resuming running of the application may mean resuming running of the application to a status at the last suspension.

For example, as shown in FIG. 4, a storage address of a context of the APP 43 in a memory may be obtained by using the guest OS 42.

It should be noted that, in this embodiment of the present invention, after obtaining the resumption information of the application by using the guest operating system, the physical host may further first determine whether the system call, the exception, or the interrupt that triggers the exit request can be processed by the guest operating system. If the system call, the exception, or the interrupt can be processed by the guest operating system, related processing may be performed by using the guest operating system, and then the context of the application may be directly restored and running of the application may be resumed. If the system call, the exception, or the interrupt cannot be processed by using the guest operating system, the physical host may continue to perform the following step 103.

In some implementations, after step 102, the physical host may further store the resumption information of the application, for example, into the memory, by using the guest operating system, so that after related processing is performed by using the guest operating system, the context of the application can be directly restored by using the guest operating system. Certainly, if the processing cannot be performed by using the guest operating system, the resumption information may not need to be stored by using the guest operating system, but instead, the obtained resumption information may be directly transferred to the virtual machine monitor by using the guest operating system.

Step 103: The guest operating system transfers the resumption information of the application to a virtual machine monitor.

In this embodiment of the present invention, the guest operating system may transfer the resumption information to the virtual machine monitor in a register-based transfer manner or an interface-invocation-based transfer manner. The register-based transfer manner may mean that the guest operating system writes the resumption information of the application into a register accessible to the virtual machine monitor, and sends an address of the register to the virtual machine monitor, and then the virtual machine monitor reads the resumption information of the application from the register indicated by the received address. The interface-invocation-based transfer may mean that the guest operating system directly invokes an interface of the virtual machine monitor to transfer the resumption information of the application.

Step 104: The guest operating system causes an exit to the virtual machine monitor.

After the resumption information of the application is transferred to the virtual machine monitor by using the guest operating system, the guest operating system may cause an exit to the virtual machine monitor. In other words, the system control right of the physical host is switched from the guest operating system to the virtual machine monitor.

For example, referring to FIG. 4, an interface of the VMM 30 may be invoked by using the guest OS 42 to transfer the address of the context of the APP 43 to the VMM 30, and the guest OS 42 causes an exit to the VMM 30.

Step 105: The virtual machine monitor stores the resumption information of the application.

When the resumption information is the context of the application, the physical host may store the context of the application into at least one of the following storage locations by using the virtual machine monitor: a control structure of a VM to which the application belongs, a management structure of a process corresponding to a virtual processor (VCPU) to which the application belongs, and a storage location other than the control structure and the management structure in the memory of the physical host.

In this embodiment of the present invention, each VM in the physical host corresponds to one control structure, and the control structure may be a virtual machine control structure (VM control structures, VMCS). A process corresponding to each VCPU corresponds to one management structure for managing the process, and the management structure may also be referred to as a process control block (PCB). For example, the management structure may be a task structure (task_struct).

In some implementations, the physical host may store the context of the application into any storage location in the control structure of the virtual machine, the management structure of the process, and the memory of the physical host by using the virtual machine monitor. Alternatively, the context of the application may be stored in a plurality of storage locations in the foregoing storage locations by using the virtual machine monitor. For example, the context of the APP 43 is stored by using the VMM 30 into a VMCS of a VM to which the APP 43 belongs and task_struct of a process corresponding to a VCPU to which the APP 43 belongs.

When the resumption information is the storage address of the context of the application, the storage address of the context of the application may be directly stored by using the virtual machine monitor. For example, the storage address may be stored in the memory. Alternatively, the virtual machine monitor may obtain, based on the storage address of the context of the application, the context of the application from a storage location indicated by the storage address, and store the obtained context of the application. For example, the obtained context of the application may be stored into at least one of the following storage locations by using the virtual machine monitor: a control structure of a VM to which the application belongs, a management structure of a process corresponding to a VCPU to which the application belongs, and a storage location other than the control structure and the management structure in the memory of the physical host.

In some implementations, step 103 may alternatively be replaced with the following step 103a:

Step 103a: The guest operating system transfers a storage address of a context of the guest operating system to the virtual machine monitor.

In this embodiment of the present invention, after running of the application is suspended and before the guest operating system causes the exit to the virtual machine monitor, the guest operating system may further transfer the storage address of the context of the guest operating system to the virtual machine monitor. The storage address of the context of the guest operating system may also be a storage address in the memory. For a manner of transferring the storage address of the context of the guest operating system, refer to the foregoing manner of transferring the resumption information of the application. Details are not described herein again.

Correspondingly, step 105 may include the following steps.

Step 1051: The virtual machine monitor determines the storage address of the context of the application based on the storage address of the context of the guest operating system and based on a relationship between the storage address of the context of the guest operating system and the storage address of the context of the application.

The context of the guest operating system and the context of the application are generally stored by being pushed into a stack, and the context of the application is generally stored before the context of the guest operating system. Therefore, the relationship between the storage address of the context of the guest operating system and the storage address of the context of the application may be determined based on a growth mode of the stack for storing the context of the guest operating system and the context of the application. The growth mode of the stack refers to a growth mode of an address of the stack, and the growth mode generally includes upward growth and downward growth. The upward growth means that the address of the stack gradually increases from the bottom to the top of the stack, and the top of the stack is a high address. The downward growth means that the address of the stack gradually increases from the top to the bottom of the stack, and the bottom of the stack is a high address.

When the growth mode of the stack is the upward growth, the relationship between the storage address of the context of the guest operating system and the storage address of the context of the application may meet as follows: Storage address of the context of the application = Storage address of the context of the guest operating system - Storage capacity (which may also be referred to as a length) occupied by the context of the guest operating system. In this case, a difference between the storage address of the context of the guest operating system and the length of the context of the guest operating system may be determined as the storage address of the context of the application.

When the growth mode of the stack is the downward growth, the relationship between the storage address of the context of the guest operating system and the storage address of the context of the application may meet as follows: Storage address of the context of the application = Storage address of the context of the guest operating system + Storage capacity (which may also be referred to as a length) occupied by the context of the guest operating system. In this case, a sum of the storage address of the context of the guest operating system and the length of the context of the guest operating system may be determined as the storage address of the context of the application.

If the length of the context of the guest operating system is a fixed value, the physical host may directly obtain the length of the context of the guest operating system by using the virtual machine monitor. If the length of the context of the guest operating system is not a fixed value, when the storage address of the context of the guest operating system is transferred to the virtual machine monitor by using the guest operating system, the length of the context of the guest operating system may be synchronously transferred.

Step 1052: The virtual machine monitor stores the storage address of the context of the application, or stores the context of the application based on the storage address of the context of the application.

After the virtual machine monitor determines the storage address of the context of the application, the storage address of the context of the application may be directly stored by using the virtual machine monitor. Alternatively, the virtual machine monitor may obtain, based on the storage address of the context of the application, the context of the application from the storage location indicated by the storage address, and store the obtained context of the application. For a manner of storing the context of the application or the storage address of the context by using the virtual machine monitor, refer to the foregoing description. Details are not described herein again.

It should be noted that, in step 105, if the resumption information stored by using the virtual machine monitor is the context of the application, because an architecture of the virtual machine monitor may be different from an architecture of the guest operating system, for example, the virtual machine monitor may be a 64-bit architecture while the guest operating system may be a 32-bit architecture, when the context of the application is stored by using the virtual machine monitor, a data format of the context of the application further needs to be converted (for example, a zero adding operation may be performed on the context of the application), so that a converted context of the application can meet an architecture requirement of the virtual machine monitor.

It should be further noted that, when the resumption information is stored by using the virtual machine monitor, in addition to the control structure, the management structure, and the another storage location in the memory, the resumption information may be stored in any other storage location such as a hard disk in the physical host. This is not limited in this embodiment of the present invention.

Step 106: The virtual machine monitor restores, in response to a resumption request of the application, a context of the application, and the virtual machine monitor causes an entry to the guest operating system.

In this embodiment of the present invention, the resumption request may be triggered by a signal that is sent by another process in the virtual machine monitor and that needs to be processed by the application, may be automatically triggered after an operation indicated by the exit request is completed by using the virtual machine monitor, or may be triggered when a virtual machine scheduler in the virtual machine monitor detects, based on a scheduling algorithm, that a virtual machine to which the application belongs needs to be scheduled. The restoring the context of the application by using the virtual machine monitor may be: storing (in other words, copying), by using the virtual machine monitor, the context of the application from an original storage location into a register corresponding to the application, to resume running of the application. The register corresponding to the application may be a register used when the physical host runs the application. After the context of the application is restored by using the virtual machine monitor, and the virtual machine monitor causes an entry to the guest operating system, running of the application may be resumed. To be specific, the application may be resumed to a status at the last suspension and continue to run.

In the process of resuming running of the application, the context of the application may be directly restored by using the virtual machine monitor, instead of first restoring the context of the guest operating system by using the virtual machine monitor and then restoring the context of the application by using the guest operating system, thereby saving one switching and jumping operation of the guest operating system, and effectively improving efficiency of resuming running of the application. In addition, because each application in the physical host runs on a VCPU, the improving efficiency of resuming running of the application is equivalent to improving efficiency of switching between VCPUs.

For example, the context of the APP 43 may be copied by using the VMM 30 from task_struct of the process corresponding to the VCPU to which the APP 43 belongs into a register corresponding to the APP 43, so that running of the APP 43 may be resumed.

It should be noted that because the architecture of the virtual machine monitor may be different from the architecture of the guest operating system, if the data format of the context of the application is further converted when the context of the application is stored by using the virtual machine monitor, when the context of the application is restored, the data format of the context of the application further needs to be converted (for example, a zero removing operation may be performed on the context of the application), to restore the data format of the context of the application, so that a restored context of the application can meet an architecture requirement of the guest operating system.

In some implementations, if an architecture of the physical host further includes a host operating system 20, a debugging tool, for example, a GNU (a recursive abbreviation of "GNU is Not Unix") debugger (GNU debugger, GDB) and a performance analysis tool (performance, Perf), may be further installed in the host operating system 20 of the physical host. The debugging tool may debug a process in the VMM 30 and the APP 43 in the VM 40. However, because the context of the APP 43 in the VM 40 is stored in the guest OS 42 in a related technology, when the APP 43 needs to be debugged by using the debugging tool installed in the VMM 30, the debugging tool cannot directly obtain the storage address of the context of the application. Therefore, the debugging tool needs to be first adapted before debugging the APP 43, resulting in relatively low efficiency of debugging the application.

In this embodiment of the present invention, if in step 105, the virtual machine monitor stores the context of the application in the management structure, the method may further include the following step:

Step 107: When a debugging instruction for the application is detected, debug, by using a debugging tool installed in a host operating system, the application based on a storage address of the context of the application in a management structure of a process corresponding to a VCPU to which the application belongs.

Because the management structure of the process corresponding to the VCPU to which the application belongs stores the context of the application, when the debugging instruction for the application is detected by using the virtual machine monitor, the application may be directly debugged by using the debugging tool based on the storage address of the context of the application in the management structure. In the debugging process, the debugging tool does not need to be adapted, thereby effectively improving efficiency of debugging the application.

In this embodiment of the present invention, each VCPU 40 may correspond to one physical CPU, and physical CPUs corresponding to different VCPUs 40 may be the same or may be different. Therefore, each physical CPU may correspond to one or more VCPUs 40. The VMM 30 may coordinate and provide a processing resource of each physical CPU for one or more VCPUs 40 corresponding to the physical CPU. Each physical CPU may be a physical core. Each VCPU may correspond to one thread in the VMM 30. For example, as shown in FIG. 5, a VCPUa corresponds to a thread a, and a VCPUb corresponds to a thread b. The VMM 30 may schedule different threads in the physical CPU by using a thread scheduling policy, so that a plurality of VCPUs 40 corresponding to a same physical CPU may be switched for running. Using switching from the VCPUa to the VCPUb as an example, a time required for the VCPU switching process may include: a time for storing a context of an application running in the VCPUa, a time for restoring a context of an application running in the VCPUb, and a time required for switching from the thread a to the thread b.

In a related technology, to improve efficiency of switching between the VCPUs 40, referring to FIG. 5, a plurality of VCPUs 40 corresponding to a same physical CPU may be managed as a VCPU queue, and the VCPU queue is bound to an agent thread in the VMM 30. When VCPU switching needs to be performed between VCPUs in the VCPU queue, thread switching does not need to be performed, thereby effectively improving VCPU switching efficiency. The VCPU switching generally takes about 5 microseconds (us). After the method provided in this embodiment of the present invention is used, because a time for restoring a context of an application in a VCPU can be effectively shortened during VCPU switching, the VCPU switching efficiency can be further improved. For example, a VCPU switching time can be shortened from 5 us to less than 1 us.

In some implementations, in this embodiment of the present invention, the physical host may be a base station, a server, or the like. An application in a virtual machine running in the physical host may be a mobile communication service application. For example, the application in the virtual machine running in the physical host may include a 4th generation mobile communications technology (4G) application and a 5th-generation mobile communications technology 5G application. When a VCPU running on a VM to which the 4G application belongs and a VCPU running on a VM to which the 5G application belongs correspond to a same physical CPU, fast switching between the 4G application and the 5G application needs to be implemented. The method for resuming running of an application provided in this embodiment of the present invention can meet a requirement for fast switching between the 4G application and the 5G application.

It should be noted that a sequence of steps of the method for resuming running of an application provided in this embodiment of the present invention may be properly adjusted, and a step may also be correspondingly added or deleted based on a situation. For example, step 102 may be deleted based on a situation, and step 103 may be replaced with step 103a. Alternatively, step 107 may be deleted based on a situation. Any variation readily figured out by a person skilled in the art within the technical scope disclosed in this application shall fall within the protection scope of this application, and details are not described herein.

In conclusion, this embodiment of the present invention provides a method for resuming running of an application. In the method, after running of an application is suspended, a context of the application or a storage address of the context may be stored by using a virtual machine monitor. In this way, when running of the application needs to be resumed, the context of the application may be directly restored by using the virtual machine monitor. In the process of resuming running of the application, it is unnecessary to first restore a context of a guest operating system by using the virtual machine monitor and then restore the context of the application by using the guest operating system, thereby saving one context restoration operation, and effectively improving efficiency of resuming running of the application.

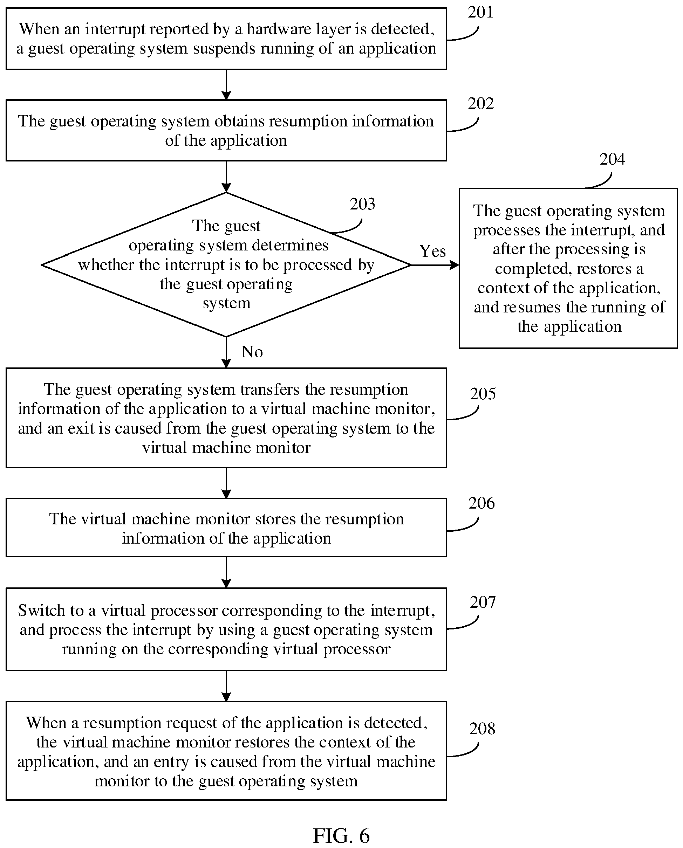

FIG. 6 is a flowchart of another method for resuming running of an application according to an embodiment of the present invention. The method for resuming running of an application is described by using an example in which the exit request is triggered by an interrupt. Referring to FIG. 6, the method may include the following steps.

Step 201: When an interrupt reported by a hardware layer is detected, a guest operating system suspends running of the application.

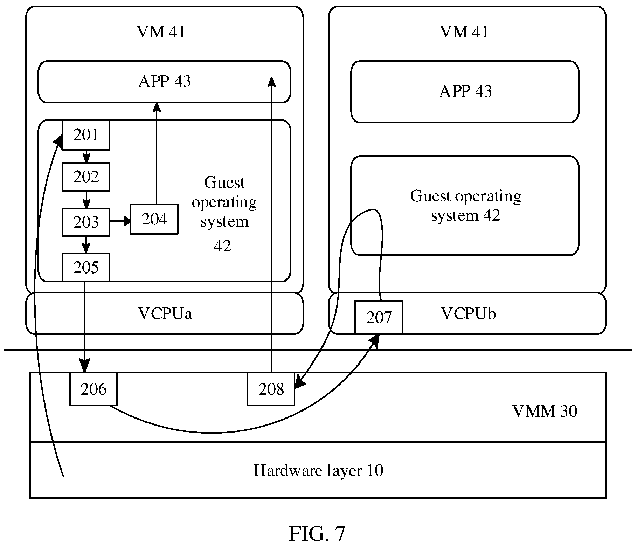

For example, referring to FIG. 7, assuming that an interrupt reported by a hardware layer 10 is received in a process of running an APP 43 by using a VCPUa, running of the APP 43 may be suspended by using the VCPUa, and the APP 43 causes an exit to a guest OS 42.

Step 202: The guest operating system obtains resumption information of the application.

For an implementation process of step 202, refer to step 102. Details are not described herein again.

Step 203: The guest operating system determines whether the interrupt is to be processed by the guest operating system.

In this embodiment of the present invention, the guest operating system may store an interrupt distribution list. The interrupt distribution list may record a VCPU corresponding to each interrupt. The guest operating system may determine, based on the interrupt distribution list, a VCPU corresponding to the currently detected interrupt, and determine whether the VCPU corresponding to the interrupt is a VCPU supporting running of the guest operating system (in other words, a VCPU to which the guest operating system belongs).

If the VCPU corresponding to the interrupt is the VCPU to which the guest operating system belongs, it may be determined that the interrupt is to be processed by the guest operating system, and therefore, step 204 may be performed. If the VCPU corresponding to the interrupt is not the VCPU to which the guest operating system belongs, it may be determined that the interrupt is not to be processed by the guest operating system, and therefore, the following step 205 may continue to be performed.

Step 204: The guest operating system processes the interrupt, and after the processing is completed, restores a context of the application, and resumes the running of the application.

If it is determined, by using the guest operating system, that the interrupt is to be processed by the guest operating system, the interrupt may be directly processed by using the guest operating system. After the processing is completed, the context of the application may be directly restored by using the guest operating system, and the running of the application may be resumed.

Step 205: The guest operating system transfers the resumption information of the application to the virtual machine monitor, and the guest operating system causes an exit to the virtual machine monitor.

Step 206: The virtual machine monitor stores the resumption information of the application.

For an implementation process of step 205 and step 206, refer to related descriptions of step 103 to step 105. Details are not described herein again.

Step 207: Switch to a virtual processor corresponding to the interrupt, and process the interrupt by using a guest operating system running on the corresponding virtual processor.

In this embodiment of the present invention, when the exit request is triggered by the interrupt, after a system control right of a physical host is switched from the guest operating system to the virtual machine monitor, the virtual processor corresponding to the interrupt may be determined by using the virtual machine monitor, and the corresponding virtual processor is switched to, to process the interrupt by using the guest operating system running on the corresponding virtual processor.

In some implementations, the physical host may determine, based on the interrupt distribution list by using the virtual machine monitor, the virtual processor corresponding to the interrupt. Alternatively, when the guest operating system causes an exit to the virtual machine monitor, an identifier of the virtual processor corresponding to the interrupt may be directly transferred to the virtual machine monitor by using the guest operating system, so that the virtual machine monitor may directly switch to the virtual processor indicated by the identifier.

For example, referring to FIG. 7, assuming that the virtual processor corresponding to the interrupt is a VCPUb, the VMM 30 may switch to run the VCPUb, and process the interrupt by using a guest OS 42 running on the VCPUb.

Step 208: When a resumption request of the application is detected, the virtual machine monitor restores the context of the application, and the virtual machine monitor causes an entry to the guest operating system.

For example, when the physical host detects, by using the VMM 30, that the guest OS 42 running on the VCPUb completes processing of the interrupt, the physical host may trigger a resumption request of the APP 43 in the VCPUa, and restore a context of the APP 43 by using the VMM 30, and the VMM 30 causes an entry to the guest OS 42, so that running of the APP 43 may be resumed.

For an implementation process of step 208, refer to related descriptions in step 106. Details are not described herein again.

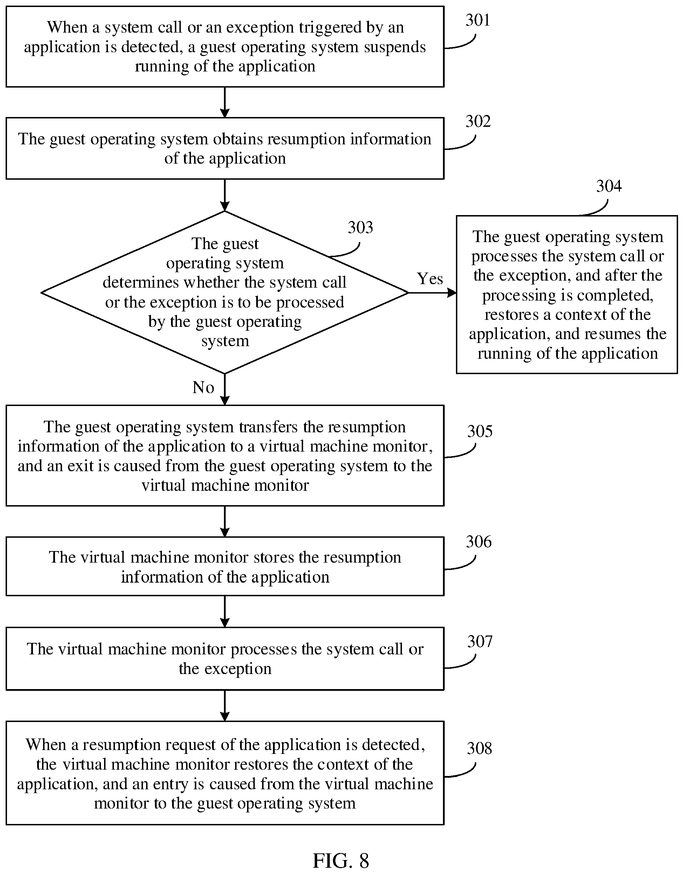

FIG. 8 is a flowchart of another method for resuming running of an application according to an embodiment of the present invention. The method for resuming running of an application is described by using an example in which the exit request is triggered by a system call or an exception. Referring to FIG. 8, the method may include the following steps.

Step 301: When a system call or an exception triggered by an application is detected, a guest operating system suspends running of the application.

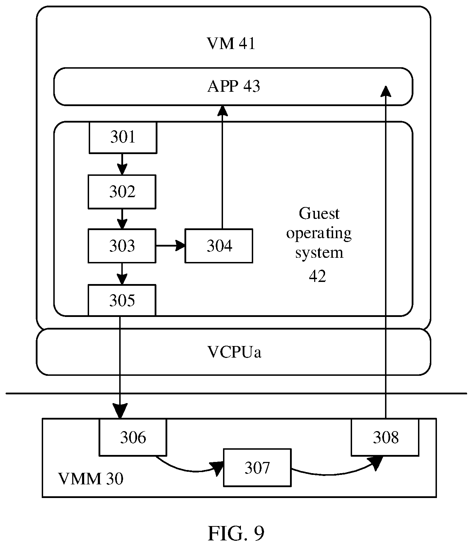

For example, referring to FIG. 9, assuming that an APP 43 triggers a system call when the APP 43 runs on a VCPUa, running of the APP 43 may be suspended by using the VCPUa, and the APP 43 causes an exit to a guest OS 42.

Step 302: The guest operating system obtains a context of the application.

For an implementation process of step 302, refer to step 102. Details are not described herein again.

Step 303: The guest operating system determines whether the system call or the exception is to be processed by the guest operating system.

In this embodiment of the present invention, the guest operating system may store a processing function list. The processing function list may record a type of a system call or an exception that can be processed by the guest operating system. A physical host may determine, based on the processing function list by using the guest operating system, whether the system call or the exception can be directly processed by the guest operating system.

If it is determined, by using the guest operating system, that the system call or the exception can be directly processed by the guest operating system, step 304 may be performed. If it is determined, by using the guest operating system, that the system call or the exception cannot be processed by the guest operating system, the following step 305 may continue to be performed.

Step 304: The guest operating system processes the system call or the exception, and after the processing is completed, restores the context of the application, and resumes the running of the application.

If it is determined, by using the guest operating system, that the system call or the exception can be processed by the guest operating system, the system call or the exception may be directly processed by using the guest operating system. After the processing is completed, the context of the application may be restored by using the guest operating system, and the running of the application may be resumed.

Step 305: The guest operating system transfers resumption information of the application to the virtual machine monitor, and the guest operating system causes an exit to the virtual machine monitor.

When it is determined, by using the guest operating system, that the system call or the exception cannot be processed by the guest operating system, the resumption information of the application may be transferred to the virtual machine monitor by using the guest operating system, and the guest operating system causes an exit to the virtual machine monitor.

Step 306: The virtual machine monitor stores the resumption information of the application.

For an implementation process of step 305 and step 306, refer to related descriptions in step 103 to step 105. Details are not described herein again.

Step 307: The virtual machine monitor processes the system call or the exception.

In this embodiment of the present invention, after a system control right of the physical host is switched from the guest operating system to the virtual machine monitor, the virtual machine monitor may process the system call or the exception.

Step 308: When a resumption request of the application is detected, the virtual machine monitor restores the context of the application, and the virtual machine monitor causes an entry to the guest operating system.

For example, when the physical host completes processing of the system call by using the VMM 30, the physical host may trigger a resumption request of the APP 43 in the VCPUa, and restore a context of the APP 43 by using the VMM 30, and the VMM 30 causes an entry to the guest OS 42, so that running of the APP 43 may be resumed.

For an implementation process of step 308, refer to related descriptions of step 106. Details are not described herein again.

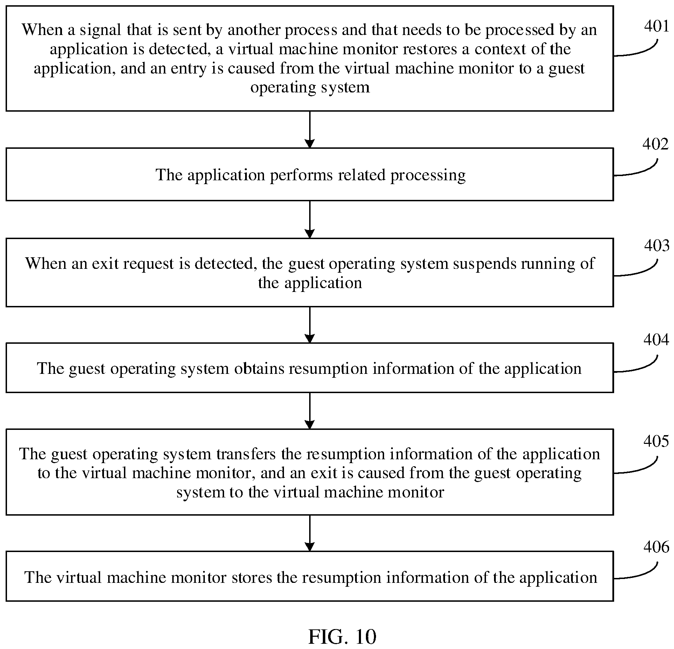

FIG. 10 is a flowchart of another method for resuming running of an application according to an embodiment of the present invention. The method for resuming running of an application is described by using an example in which the resumption request is a signal sent by another process. Referring to FIG. 10, the method may include the following steps.

Step 401: When a signal that is sent by another process and that needs to be processed by the application is detected, a virtual machine monitor restores a context of the application, and the virtual machine monitor causes an entry to a guest operating system.

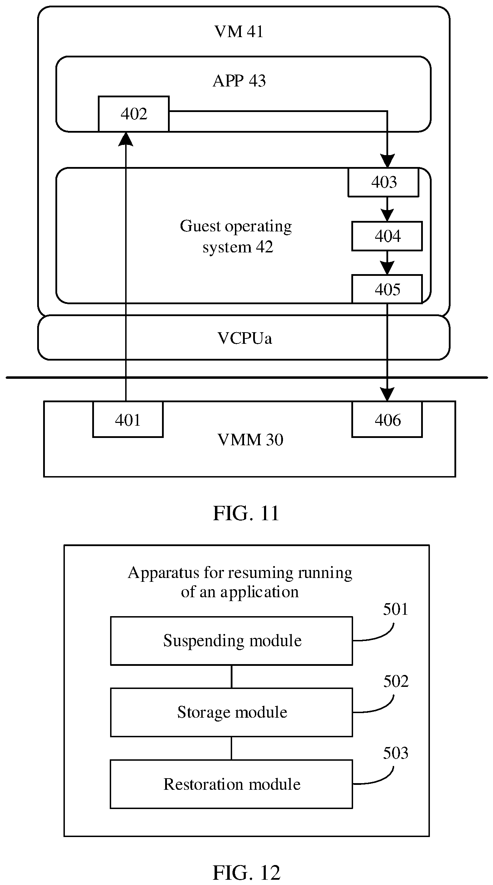

For example, referring to FIG. 11, assuming that a VCPUa is currently not in position (in other words, not running), and a physical host receives, by using a VMM 30, a signal that is sent by another process and that needs to be processed by an APP 43 in the VCPUa, a context of the APP 43 may be restored by using the VMM 30, and the VMM 30 causes an entry to a guest OS 42, so that running of the APP 43 may be resumed. The context of the APP 43 may be stored by using the VMM 30 when running of the APP 43 is last suspended.

For an implementation process of step 401, refer to related descriptions of step 106. Details are not described herein again.

Step 402: The application performs related processing.

For example, the APP 43 in the VCPUa may perform related processing on the signal that triggers running of the APP 43 to be resumed.

Step 403: When an exit request is detected, the guest operating system suspends running of the application.

Step 404: The guest operating system obtains resumption information of the application.

Step 405: The guest operating system transfers the resumption information of the application to the virtual machine monitor, and the guest operating system causes an exit to the virtual machine monitor.

Step 406: The virtual machine monitor stores the resumption information of the application.

For an implementation process of step 403 to step 406, refer to related descriptions in step 101 to step 105. Details are not described herein again.

In conclusion, this embodiment of the present invention provides a method for resuming running of an application. In the method, after running of an application is suspended, a context of the application or a storage address of the context may be stored by using a virtual machine monitor. In this way, when the running of the application needs to be resumed, the context of the application may be directly restored by using the virtual machine monitor. In the process of resuming the running of the application, it is unnecessary to first restore a context of a guest operating system by using the virtual machine monitor and then restore the context of the application by using the guest operating system, thereby saving one context restoration operation, and effectively improving efficiency of resuming the running of the application.

It should be noted that, in this application, when an operation is performed "by using" a guest OS, a VMM, or the like, it may be understood that a physical host is an execution body, and the physical host performs the operation "by using" a VMM or a guest OS deployed on the physical host. This description is equivalent to that the guest OS, the VMM, or the like "performs" the operation. In other words, the guest OS, the VMM, or the like is directly understood as an execution body. Regardless of which description method is used, the essence is that a processor runs a software program (the guest OS or the VMM) to perform the operation.

An embodiment of the present invention further provides a physical host. Referring to FIG. 1, FIG. 2, and FIG. 5, the physical host may include: a hardware layer 10, a virtual machine monitor 30 running on the hardware layer 10, a guest operating system 42 running on the virtual machine monitor 30, and an application 43 running on the guest operating system 42.

The guest operating system 42 may be configured to suspend, in response to an exit request, running of the application 43, and cause an exit to the virtual machine monitor 30.

The virtual machine monitor 30 may be configured to store resumption information of the application 43, where the resumption information includes a context of the application 43 or a storage address of the context.

The virtual machine monitor 30 is further configured to restore, in response to a resumption request of the application 43, the context of the application 43 based on the resumption information, and cause an entry to the guest operating system 42, so that the running of the application 43 may be resumed.

In some implementations, the guest operating system 42 may be further configured to:
obtain the resumption information of the application 43 before causing the exit to the virtual machine monitor 30; and transfer the resumption information of the application 43 to the virtual machine monitor 30.

In some implementations, the guest operating system 42 may be configured to write the resumption information into a register accessible to the virtual machine monitor or invoke an interface of the virtual machine monitor to transfer the resumption information of the application 43 to the virtual machine monitor 30.

In some implementations, the guest operating system 42 is further configured to transfer a storage address of a context of the guest operating system 42 to the virtual machine monitor 30; and correspondingly, the virtual machine monitor 30 may be configured to:
determine the storage address of the context of the application 43 based on the storage address of the context of the guest operating system 42 and based on a relationship between the storage address of the context of the guest operating system 42 and the storage address of the context of the application 43; and
store the storage address of the context of the application 43, or store the context of the application 43 based on the storage address of the context of the application 43.

In some implementations, the resumption information is the context of the application 43; and the virtual machine monitor 30 is configured to store the context of the application 43 into at least one of the following storage locations: a memory of the physical host, a control structure of a virtual machine to which the application 43 belongs, and a management structure of a process corresponding to a virtual processor to which the application 43 belongs.

In some implementations, the context of the application 43 is stored in the management structure. Referring to FIG. 1, the physical host may further include a host operating system 20 running on the hardware layer 10 and a debugging tool (not shown in FIG. 1) installed in the host operating system 20.

The debugging tool may be configured to: when a debugging instruction for the application 43 is detected, debug the application 43 based on a storage address of the context of the application 43 in the management structure.

In some implementations, the virtual machine monitor 30 may be configured to store the context of the application 43 into a corresponding register.

In some implementations, the exit request is triggered by any one of the following requests: a system call triggered by the application 43, an exception triggered by the application 43, and an interrupt reported by the hardware layer 10 of the physical host.

In conclusion, this embodiment of the present invention provides a physical host. In the physical host, after a guest operating system suspends running of an application, a context of the application or a storage address of the context may be stored by using a virtual machine monitor. In this way, when running of the application needs to be resumed, the context of the application may be directly restored by using the virtual machine monitor. In the process of resuming the running of the application, it is unnecessary to first restore a context of a guest operating system by using the virtual machine monitor and then restore the context of the application by using the guest operating system, thereby saving one context restoration operation, and effectively improving efficiency of resuming the running of the application.

FIG. 12 is a schematic diagram of a structure of another apparatus for resuming running of an application according to an embodiment of the present invention. The apparatus may be applied to the physical host shown in FIG. 1, FIG. 2, or FIG. 5. Referring to FIG. 12, the apparatus may include:
a suspending module 501, deployed in a guest operating system and configured to suspend, in response to an exit request, running of the application, where the guest operating system causes an exit to a virtual machine monitor;
a storage module 502, deployed in the virtual machine monitor and configured to store resumption information of the application, where the resumption information includes a context of the application or a storage address of the context; and
a restoration module 503, deployed in the virtual machine monitor and configured to restore, in response to a resumption request of the application, the context of the application based on the resumption information, where the guest operating system causes an entry to the guest operating system.

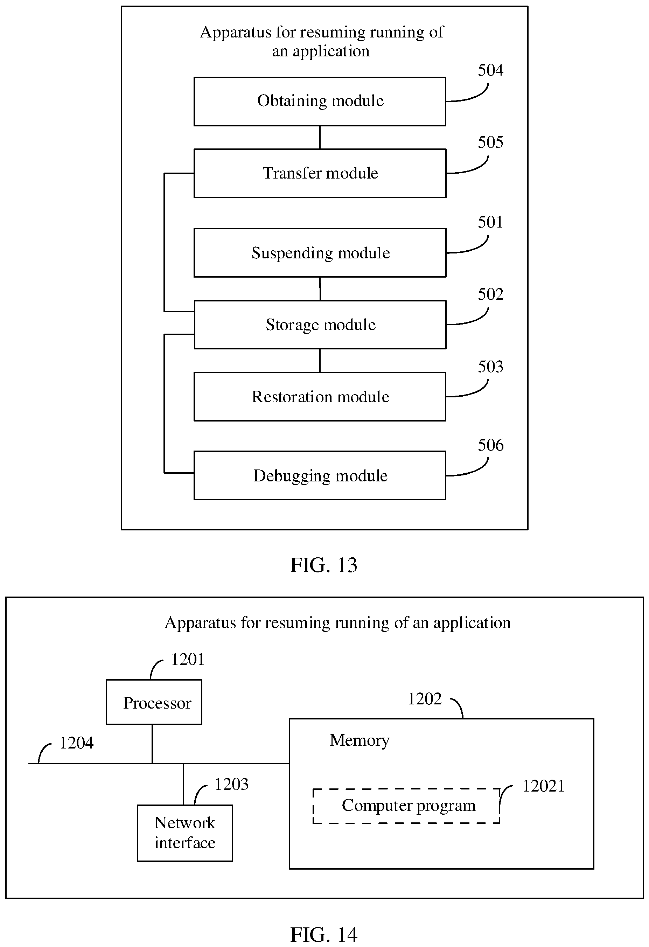

In some implementations, referring to FIG. 13, the apparatus may further include:
an obtaining module 504, deployed in the guest operating system and configured to obtain the resumption information of the application before the exit is caused to the virtual machine monitor; and
a transfer module 505, deployed in the guest operating system and configured to transfer the resumption information of the application to the virtual machine monitor.

In some implementations, the transfer module 505 may be configured to write the resumption information into a register accessible to the virtual machine monitor or invoke an interface of the virtual machine monitor to transfer the resumption information of the application to the virtual machine monitor.

In some implementations, the transfer module 505 may be configured to transfer a storage address of a context of the guest operating system to the virtual machine monitor before the guest operating system causes the exit to the virtual machine monitor.

Correspondingly, the storage module 502 may be configured to determine the storage address of the context of the application based on the storage address of the context of the guest operating system and based on a relationship between the storage address of the context of the guest operating system and the storage address of the context of the application; and store the storage address of the context of the application, or store the context of the application based on the storage address of the context of the application.

In some implementations, the resumption information is the context of the application; and the storage module 502 may be configured to:
store the context of the application into at least one of the following storage locations: a memory of the physical host, a control structure of a virtual machine to which the application belongs, and a management structure of a process corresponding to a virtual processor to which the application belongs.

In some implementations, the context of the application may be stored in the management structure. As shown in FIG. 13, the apparatus may further include:
a debugging module 506, deployed in a host operating system and configured to: when a debugging instruction for the application is detected, debug the application based on a storage address of the context of the application in the management structure.

In some implementations, the restoration module 503 may be configured to store the context of the application into a corresponding register.

In some implementations, the exit request is triggered by any one of the following requests: a system call triggered by the application, an exception triggered by the application, and an interrupt reported by a hardware layer of the physical host.

In conclusion, this embodiment of the present invention provides an apparatus for resuming running of an application. In the apparatus, after a guest operating system in the physical host suspends running of an application, a context of the application or a storage address of the context may be stored by using a virtual machine monitor. In this way, when running of the application needs to be resumed, the context of the application may be directly restored by using the virtual machine monitor. In the process of resuming the running of the application, it is unnecessary to first restore a context of a guest operating system by using the virtual machine monitor and then restore the context of the application by using the guest operating system, thereby saving one context restoration operation, and effectively improving efficiency of resuming the running of the application.

It should be understood that the apparatus for resuming running of an application in this embodiment of the present invention may be further implemented by using an application-specific integrated circuit (application-specific integrated circuit, ASIC) or a programmable logic device (programmable logic device, PLD). The PLD may be a complex program logic device (complex programmable logical device, CPLD), a field-programmable gate array (field-programmable gate array, FPGA), a generic array logic (generic array logic, GAL), or any combination thereof. Alternatively, the method for resuming running of an application provided in the foregoing method embodiment may be implemented by using software. When the method for resuming running of an application provided in the foregoing method embodiment is implemented by using software, modules in the apparatus for resuming running of an application may alternatively be software modules.

FIG. 14 is a schematic diagram of a structure of still another computer according to an embodiment of the present invention. Referring to FIG. 14, the computer may include a processor 1201, a memory 1202, a network interface 1203, and a bus 1204. The bus 1204 is configured to connect the processor 1201, the memory 1202, and the network interface 1203. A communication connection to another device may be implemented by using the network interface 1203 (which may be wired or wireless). The memory 1202 stores a computer program 12021, and the computer program 12021 is configured to implement various application functions.

It should be understood that in this embodiment of the present invention, the processor 1201 may be a CPU, or the processor 1201 may be another general purpose processor, a digital signal processor (DSP), an application-specific integrated circuit (ASIC), a field programmable gate array (FPGA), a GPU or another programmable logic device, discrete gate or transistor logic device, discrete hardware component, or the like. The general purpose processor may be a microprocessor, a processor of another type, or the like.

The memory 1202 may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

The bus 1204 may further include a power bus, a control bus, a status signal bus, and the like, in addition to a data bus. However, for clear description, various types of buses in the figure are marked as the bus 1204.

The processor 1201 is configured to execute the computer program stored in the memory 1202, and the processor 1201 implements steps in any one of the foregoing method embodiments by executing the computer program 12021. The software program in the memory may be divided into a plurality of modules in the module division manner provided in the foregoing embodiment, or may be divided in another module division manner.

An embodiment of the present invention further provides a computer-readable storage medium. The computer-readable storage medium stores an instruction. When a processor reads the instruction stored in the computer-readable storage medium, the processor is enabled to perform steps in the foregoing method embodiments.

An embodiment of the present invention further provides a computer program product including an instruction. When a processor reads the instruction included in the computer program product, the processor is enabled to perform steps in the foregoing method embodiments.

All or some of the foregoing embodiments may be implemented by means of software, hardware, firmware, or any combination thereof. When software is used to implement the embodiments, the foregoing embodiments may be implemented completely or partially in a form of a computer program product. The computer program product includes one or more computer instructions. When the computer program instructions are loaded or executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

The foregoing descriptions are merely optional embodiments of this application, but are not intended to limit this application. Any modification, equivalent replacement, or improvement made without departing from the principle of this application should fall within the protection scope of this application.

## Claims

1. A method for resuming running of an application, wherein the method is applied to a computer, and the computer comprises: a virtual machine monitor, a guest operating system running on the virtual machine monitor, and an application running on the guest operating system; and the method comprises:
suspending, by the guest operating system in response to an exit request, running of the application, and causing an exit to the virtual machine monitor;
storing, by the virtual machine monitor, resumption information of the application, wherein the resumption information comprises a context of the application or a storage address of the context; and
restoring, by the virtual machine monitor in response to a resumption request of the application, the context of the application based on the resumption information.

2. The method according to claim 1, wherein the method further comprises:
obtaining, by the guest operating system the resumption information of the application; and
transferring, by the guest operating system, the resumption information to the virtual machine monitor.

3. The method according to claim 2, wherein the transferring, by the guest operating system, the resumption information to the virtual machine monitor comprises:
writing the resumption information into a register accessible to the virtual machine monitor or invoking an interface of the virtual machine monitor to transfer the resumption information to the virtual machine monitor.

4. The method according to claim 1, wherein the method further comprises:
transferring, by the guest operating system, a storage address of a context of the guest operating system to the virtual machine monitor; and
the storing, by the virtual machine monitor, resumption information of the application comprises:
determining, by the virtual machine monitor, the storage address of the context of the application based on the storage address of the context of the guest operating system and based on a relationship between the storage address of the context of the guest operating system and the storage address of the context of the application; and
storing, by the virtual machine monitor, the storage address of the context of the application, or storing the context of the application based on the storage address of the context of the application.

5. The method according to any one of claims 1 to 4, wherein the resumption information is the context of the application; and the storing, by the virtual machine monitor, resumption information of the application comprises:
storing, by the virtual machine monitor, the context of the application to at least one of the following storage locations:
a control structure of a virtual machine to which the application belongs;
a management structure of a process corresponding to a virtual processor to which the application belongs; and
a storage location other than the control structure and the management structure in a memory of the computer.

6. The method according to claim 5, wherein the computer further comprises a host operating system and a debugging tool installed in the host operating system; the context of the application is stored in the management structure body; and the method further comprises:
when a debugging instruction for the application is detected, debugging, by the debugging tool, the application based on a storage address of the context of the application in the management structure.

7. The method according to any one of claims 1 to 6, wherein the restoring, by the virtual machine monitor, the context of the application comprises:
storing, by the virtual machine monitor, the context of the application to a corresponding register.

8. The method according to any one of claims 1 to 7, wherein the exit request is triggered by any one of the following events:
a system call triggered by the application;
an exception triggered by the application; and
an interrupt reported by a hardware layer of the computer.

9. A computer, wherein the computer comprises: a hardware layer, a virtual machine monitor running on the hardware layer, a guest operating system running on the virtual machine monitor, and an application running on the guest operating system;
the guest operating system is configured to suspend, in response to an exit request, running of the application, and cause an exit to the virtual machine monitor;
the virtual machine monitor is configured to store resumption information of the application, wherein the resumption information comprises a context of the application or a storage address of the context; and
the virtual machine monitor is further configured to restore, in response to a resumption request of the application, the context of the application based on the resumption information.

10. The computer according to claim 9, wherein the guest operating system is further configured to: obtain the resumption information of the application before causing the exit to the virtual machine monitor; and transfer the resumption information of the application to the virtual machine monitor.

11. The computer according to claim 10, wherein the guest operating system is configured to: write the resumption information into a register accessible to the virtual machine monitor or invoke an interface of the virtual machine monitor to transfer the resumption information to the virtual machine monitor.

12. The computer according to claim 9, wherein
the guest operating system is further configured to transfer a storage address of a context of the guest operating system to the virtual machine monitor; and
the virtual machine monitor is configured to:
determine the storage address of the context of the application based on the storage address of the context of the guest operating system and based on a relationship between the storage address of the context of the guest operating system and the storage address of the context of the application; and
store the storage address of the context of the application, or store the context of the application based on the storage address of the context of the application.

13. The computer according to any one of claims 9 to 12, wherein the resumption information is the context of the application; and the virtual machine monitor is configured to store the context of the application to the at least one of the following storage locations:
a control structure of a virtual machine to which the application belongs;
a management structure of a process corresponding to a virtual processor to which the application belongs; and
a storage location other than the control structure and the management structure in a memory of the computer.

14. The computer according to claim 13, wherein the context of the application is stored in the management structure; the computer further comprises a host operating system running on the hardware layer, and a debugging tool installed in the host operating system; and
the debugging tool is configured to, when a debugging instruction for the application is detected, debug the application based on a storage address of the context of the application in the management structure.

15. The computer according to any one of claims 9 to 14, wherein
the virtual machine monitor is configured to store the context of the application to a corresponding register.

16. The computer according to any one of claims 9 to 15, wherein the exit request is triggered by any one of the following events:
a system call triggered by the application;
an exception triggered by the application; and
an interrupt reported by a hardware layer of the computer.

17. An apparatus for resuming running of an application, wherein the apparatus is applied to a computer, and the computer comprises: a virtual machine monitor, a guest operating system running on the virtual machine monitor, and an application running on the guest operating system; and the apparatus comprises:
a suspending module, deployed in the guest operating system and configured to suspend, in response to an exit request, running of the application, wherein the guest operating system causes an exit to the virtual machine monitor;
a storage module, deployed in the virtual machine monitor and configured to store resumption information of the application, wherein the resumption information comprises a context of the application or a storage address of the context; and
a restoration module, deployed in the virtual machine monitor and configured to restore, in response to a resumption request of the application, the context of the application based on the resumption information.

18. The apparatus according to claim 17, wherein the apparatus further comprises:
an obtaining module, deployed in the guest operating system and configured to obtain the resumption information of the application before the exit to the virtual machine monitor is caused; and
a transfer module, deployed in the guest operating system and configured to transfer the resumption information of the application to the virtual machine monitor.

19. A computer, wherein the computer comprises a memory, a processor, and a computer program that is stored in the memory and that can run on the processor, and when the processor executes the computer program, the method for resuming running of an application according to any one of claims 1 to 8 is implemented.

20. A computer program product, wherein the computer program product stores an instruction, and when the computer program product runs on a computer, the computer is enabled to perform the method for resuming running of an application according to any one of claims 1 to the data 8.
